# EUROPEAN PATENT SPECIFICATION

(11) **EP 2 071 857 B1**
(45) Date of publication and mention of the grant of the patent: **26.01.2011**
(21) Application number: 07721767.7
(22) Date of filing: 21.06.2007
(51) Int. Cl.: H04W 4/14

(54) **Method and system for realizing short message service by NGN terminal**
Verfahren und System zur Realisierung von SMS durch ein NGN-Endgerät
Procédé et système de réalisation d'un service de messages courts au moyen d'un terminal NGN

(30) Priority: 29.09.2006 CN 200610152454
(43) Date of publication of application: 17.06.2009
(73) Proprietor: Huawei Technologies Co., Ltd., Longgang District, Shenzhen Guangdong 518129 (CN)
(72) Inventor: YUAN, Hongjin, Shenzhen, Guangdong 518129 (CN); HU, Yueming, Shenzhen, Guangdong 518129 (CN); WANG, Xu, Shenzhen, Guangdong 518129 (CN); HU, Haihua, Shenzhen, Guangdong 518129 (CN)
(74) Representative: Gulde Hengelhaupt Ziebig & Schneider
(86) International application number: PCT/CN2007/070148
(87) International publication number: WO 2008/037188

(56) References cited:
- CN-A- 1 784 069
- GB-A- 2 382 272
- KR-A- 20040 049 898
- US-A1- 2005 143 076

## Description

### FIELD OF THE INVENTION

The invention relates to techniques for Next Generation Network (NGN), and more particularly, to a method, system and NGN Short Message Service (SMS) of implementing SMS for an NGN terminal.

### BACKGROUND

NGN is a next generation network incorporating circuit switching networks such as Public Switched Telephone Network (PSTN) or Public Land Mobile Network (PLMN) and packet switching IP networks. In NGN, integrated services of voice, video, data, and the like, may be deployed.

NGN uses a unified IP/MPLS carrier network having Quality of Service (QoS) capability to support various services. Soft switch having packet switching control capability is a core component in NGN. The call control protocol of NGN is Session Initiation Protocol (SIP). NGN may provide access to a conventional circuit switching network via a signaling gateway and a relay gateway so that interoperability with the circuit switching network may be achieved.

For SMS which is a basic data service in the conventional circuit switching network, interoperability has been achieved among terminals based on Global System for Mobile communications (GSM), Code Division Multiple Access (CDMA), Personal Handy-phone System (PHS) and the like. However, due to the complexity and the diversity of NGN terminals, there is no good solution at present to normalize the technical standards for short message transmission and reception by NGN terminals for various manufacturers.

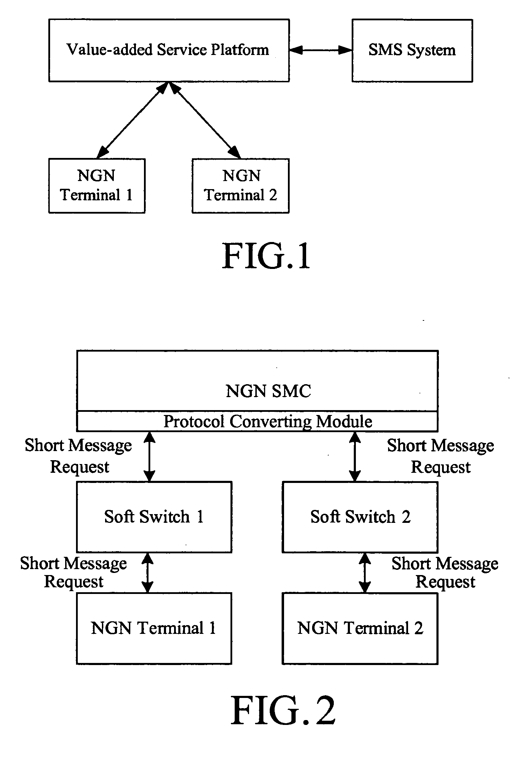

Presently, SMS have been implemented for some NGN terminals. FIG.1 illustrates the configuration of an existing system of implementing SMS for an NGN terminal. As shown in FIG.1, the NGN terminal communicates with the value-added service platform directly with a private protocol. The value-added service platform uses the standardized Short Message Peer to Peer (SMPP) to access the short message system. Registration and de-registration messages need to be redefined between the NGN terminal and the value-added service platform. Furthermore, both parties need to maintain heart-beat messages to detect whether the NGN terminal is on line. As an access part between the NGN terminal and the short message system, the value-added service platform further needs to perform conversions between the private protocol and the standardized short message protocol.

The method with which the system of FIG.1 implements SMS may be summarized generally as follows.

1) The NGN terminal transmits a short message as follows. The NGN terminal establishes an IP link with the value-added service platform. The short message is transmitted to the value-added service platform via a private protocol over the established IP link. The value-added service platform decodes the received short message, and then encodes the decoded message into a packet based on the standardized short message protocol, which is forwarded to the short message system. In this way, the NGN terminal may transmit a short message.

2) The NGN terminal receives a short message as follows. The short message system transmits the short message to the value-added service platform in a standardized short message protocol packet. The value-added service platform converts the received short message into a packet compliant with the private protocol format, which is forwarded to the NGN terminal over the IP link established between the NGN terminal and the value-added service platform. In this way, the NGN terminal may receive a short message.

3) The NGN terminal acquires an off-line short message as follows. After the NGN terminal is on-line, the value-added service platform sends the off-line short message for the NGN terminal to the NGN terminal just as the NGN terminal receives a short message.

In the existing methods of implementing SMS for an NGN terminal, each NGN terminal has to be registered with the value-added service platform, and establishes an IP link with the value-added service platform, and heart-beat is maintained. Shortcomings are caused as follows.

(1) A registration message is transmitted to the value-added service platform when the NGN terminal logs in, and a de-registration message is transmitted to the value-added service platform when the NGN terminal logs out. Moreover, a heart-beat message is maintained between the NGN terminal and the value-added service platform. Thus, the overhead will be increased for the value-added service platform. The NGN terminal transmits a heart-beat message to the value-added service platform. Upon receipt of the message, the value-added service platform decodes and processes the private message packet in the heart-beat message, which is then encoded into a message packet based on the private protocol and sent to the NGN terminal as a heart-beat confirmation message. The capability of the Central Processing Unit (CPU) in the value-added service platform is thus wasted additionally, and the system overhead is increased greatly. In an example where ten thousand users are online concurrently, it is assumed that the heart-beat period is 1 minute. As such, the value-added service platform has to process 166 heart-beat messages per second on the average, and meanwhile the session data for the ten thousand users has to be maintained in the memory of the platform.

(2) According to the protocol, an SIP link already exists between the NGN terminal and the soft switch. Furthermore, the registration, de-registration and heart-beat messages already exist between both parties. But in the existing method, the NGN terminal needs a further IP link to the value-added service platform. As a result, the system is complicated greatly, and the system extensibility is decreased. Moreover, there are several defects when an additional IP link is introduced between the NGN terminal and the value-added service platform. On one hand, the value-added service platform is exposed on the public network so as to be connected by the NGN terminals. Although many solutions have been proposed presently to address the network security, the risk for the value-added service platform to be attacked is increased, and thus the system security risk is increased. On the other hand, in order to decrease the security risk, a security device has to be added to guarantee the network security of the value-added service platform, which causes an increase in the system investments.

(3) Because a voluntary registration is made to the value-added service platform when the NGN terminal logs in, the NGN terminal has to be configured with the IP address of the value-added service platform first. Once the IP address of the value-added service platform changes, the configurations of all NGN terminals have to be changed accordingly. The maintenance work is substantial and the system maintainability is deceased.

As described above, the existing solutions are only applicable to networks with IP links established between the NGN terminal and the value-added service platform. For a large number of NGN terminals directly connected to the soft switch at present, only IP links are maintained with the soft switch, and accordingly SMS cannot be implemented yet. Moreover, in the existing solutions, there are shortcomings in terms of both performance and security. In particular, the system complexity is increased, and the system extensibility is weakened.
US 2005/0143076 A1 relates to an interconnection agreement determining system, apparatus, and method capable of accurately determining whether the carrier to which an originating communication terminal subscribes and the carrier to which an receiving communication terminal subscribes have a short message interconnection agreement with each other, even if the receiving communication terminal uses number portability.
GB 2382272 A relates to a method for notifying a mobile phone that a message has arrived at a server. In a messaging system comprising a message server 1 and a mobile device 11, server 1, in response to receiving a message, e.g. an e-mail, sends a notification message to device 11, the notification having information may include sender, subject and/or priority details, and the notification may be sent when these details fulfill predetermined criteria, with the criteria being set using device 11 and priority being assigned by server 1 in accordance with predefined rules. Server 1 and device 11 may communicate wirelessly, e.g. using a GSM and/or GPRS protocol, with the notification comprising an SMS message. Bi-directional communication may be established upon receipt of the notification allowing device 11 to request transmission of the message, with the request being made selectively by the device depending on the message sender, subject and/or priority.

### SUMMARY

In view of the above problems, an embodiment of the invention provides a method of implementing Short Message Service (SMS) for a Next Generation Network (NGN) terminal, which may be applied to various NGN terminals and enhance the system extensibility.

Another embodiment of the invention provides a system of implementing SMS for an NGN terminal, which may be applied to various NGN terminals and enhance the system extensibility.

Still another embodiment of the invention provides an NGN SMC, which may be applied to various NGN terminals and enhance the system extensibility.

Specifically, the solutions of the invention may be implemented as follows.

A method of implementing SMS for an NGN terminal includes:
receiving, by an NGN Short Message Center (SMC), a short message transmission request forwarded by a soft switch, wherein the short message transmission request is from an NGN terminal; converting, by the NGN SMC, the received short message transmission request into a message format compliant with its own protocol; and transmitting, by the NGN SMC, a short message according to the received short message transmission request.

A system of implementing SMS includes a soft switch and an NGN SMC.

The soft switch is configured to transparently transmit information exchanged between an NGN terminal and the NGN SMC.

The NGN terminal is configured to exchange information with the soft switch via an existing Session Initiation Protocol (SIP) link.

The NGN SMC includes a short message transmitting unit and/or a short message receiving unit and/or a protocol converting module and/or an off-line short message acquiring unit.

The short message transmitting unit is configured to receive a short message transmission request from the NGN terminal forwarded via the soft switch, and to transmit a short message to the NGN terminal.

The short message receiving unit is configured to forward a short message reception request to the NGN terminal via the soft switch so that the NGN terminal receives the short message.
the protocol converting module, configured to convert the received short message transmission request based on SIP from the soft switch, into a message identifiable by itself, and transmit the message to the short message transmitting unit; or transmit the short message reception request to the short message receiving unit after converting the short message reception request into an SIP-based message; and

The off-line short message acquiring unit is configured to receive an off-line short message acquisition request forwarded via the soft switch from the NGN terminal, to carry a stored short message for the NGN terminal in an SIP-based message, and to forward the SIP-based message to the NGN terminal via the soft switch.

From the above solutions, it can be seen that in embodiments of the present invention, SMS may be implemented for various NGN terminals by setting an NGN SMC and extending the SIP message. The NGN terminal may utilize an existing SIP link with the soft switch. The soft switch may transparently transmit SIP messages exchanged between the NGN terminal and the NGN SMC. The NGN terminal may have a capability of transmitting and receiving short messages. And the system maintainability may be enhanced.

In the system for implementing SMS according to the present invention, the NGN terminal may exchange information with the NGN SMC through the transparent transmission of the soft switch. To the NGN terminal, there is no need for the NGN terminal to establish a private protocol based link with the value-added service platform, and only the existing SIP link is maintained with the soft switch, which enhances the system extensibility and flexibility. Furthermore, as long as the Extensible Markup Language (XML) content carried in the SIP message is extended, it may be readily applied to other services, for example, instant messaging or multimedia short messaging on the NGN terminal. To the NGN SMC acting as the service platform, there is no need to be oriented to all NGN terminals as long as a link is maintained with the soft switch. The system security is improved greatly and the system overhead is saved significantly. In this manner, the NGN SMS may be managed and maintained by the NGN SMC uniformly, which enhances the system maintainability.

### BRIEF DESCRIPTION OF THE DRAWINGS

FIG.1 illustrates the configuration of an existing system of implementing SMS for an NGN terminal;

FIG.2 illustrates the configuration of a system of implementing SMS for an NGN terminal according to an embodiment of the present invention;

FIG.3 illustrates an embodiment of implementing SMS for an NGN terminal according to the present invention;

FIG.4 illustrates an embodiment for an NGN terminal to transmit a short message according to the present invention;

FIG.5 illustrates an embodiment for an NGN terminal to receive a short message according to the present invention; and

FIG.6 illustrates an embodiment for an NGN terminal to acquire an off-line short message according to the present invention.

### DETAILED DESCRIPTION

In embodiments of the present invention, the soft switch forwards the short message transmission request to the NGN SMC, and then the NGN SMC transmits a short message according to the received short message transmission request.

The solutions and advantages of the invention will be more fully understood when considered with respect to further detailed description of the preferred embodiments of the invention taken in conjunction with the accompanying drawings.

FIG.2 illustrates the configuration of a system of implementing SMS for an NGN terminal according to an embodiment of the present invention. As shown in FIG.2, the system at least includes an NGN terminal, a soft switch, and an NGN SMC.

The soft switch is configured to transparently transmit information related to short messages between the NGN terminal and the NGN SMC.

The NGN SMC has a service function similar to a conventional SMC. Different from the conventional SMC, the protocol for a terminal to access the NGN SMC is SIP. A protocol converting module is thus added to the conventional SMC so that conversions between the SIP and the protocol of the NGN SMC may be enabled. Alternatively, if the protocol inside the NGN SMC is SIP, no protocol conversion is necessary for interaction with the terminal to implement short message transmission.

In the following embodiments, description is made to examples in which a protocol converting module is provided in the NGN SMC.

The NGN SMC may include a short message transmitting unit and/or a short message receiving unit and/or an off-line short message acquiring unit. The short message transmitting unit is configured to receive a short message transmission request from the NGN terminal forwarded via the soft switch, to convert the received SIP-based short message transmission request into a request based on its own protocol, and to transmit a short message. The short message receiving unit is configured to convert the short message reception request into an SIP message, and to forward the short message reception request to the NGN terminal via the soft switch so that the NGN terminal receives the short message. The off-line short message acquiring unit is configured to receive an off-line short message acquisition request forwarded via the soft switch from the NGN terminal, to carry a stored short message for the NGN terminal in an SIP-based message, and to forward the SIP-based message to the NGN terminal via the soft switch.

The link between the NGN terminal and the soft switch is a link based on SIP, which may mainly implement registration, de-registration, heart-beat and call signaling messages. But according the provision of the protocol, the content of the short message cannot be carried. In view of this fact, the existing SIP message is extended to carry SMS in the present invention. The specific implementation may refer to the following embodiments.

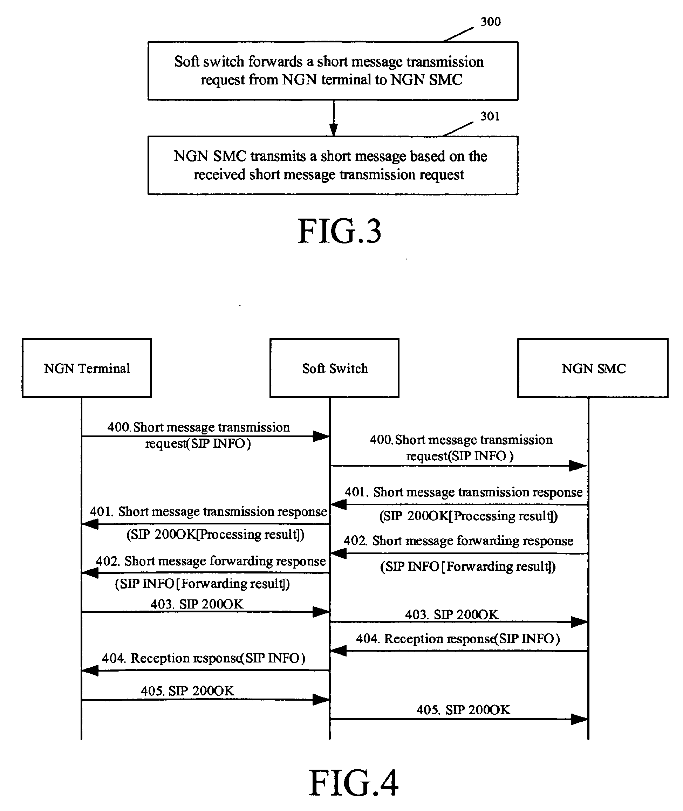

FIG.3 illustrates an embodiment of implementing SMS for an NGN terminal according to the present invention. In conjunction with FIG.2, the method according to the present invention may include the following steps.

At step 300, the soft switch forwards a short message transmission request to the NGN SMC.

The short message transmission request may use an SIP message carrying information of a Body field, for example, an out-session SIP INFO message or SIP MESSAGE message. The short message transmission request may carry the access code of the NGN SMC.

To transparently transmit messages between the NGN terminal and the NGN SMC via a soft switch, soft switches from various manufacturers shall support transparent transmission of SIP messages such as an out-session SIP INFO message or SIP MESSAGE message. In other words, the soft switch can identify the extended SIP message according to the present invention.

The NGN terminal uses SIP messages such as an out-session SIP INFO message or SIP MESSAGE message, to transmit and receive the short message request and response. The soft switch performs transparent transmission, to carry corresponding information in a message body in format of XML. The request and response events for the NGN terminal are shown in Table 1.

**Table 1**

| Event | Command code |
|---|---|
| Short message transmission request | 3001 |
| Short message transmission response | 3002 |
| Return short message transmission forwarding result to the terminal | 3003 |
| Return a return notification indicating that the recipient receives the short message to the terminal | 3004 |
| Short message reception request | 3005 |
| Off-line short message acquisition request from terminal | 3006 |

Prior to using the method, the NGN terminal has to be registered with the soft switch. Registration methods are provided in the related protocols, and detailed description is omitted here. Note that if the NGN terminal is not registered with the soft switch, the soft switch rejects the short message transmission request originated from the NGN terminal. Further, the soft switch determines whether the short message transmission request is originated from an IP address already registered in the soft switch, based on the transmitter information carried in the short message transmission request. If the short message transmission request is not originated from an IP address already registered in the soft switch, the short message request originated from the NGN terminal will be rejected.

Because the NGN terminal transmits the short message request via the soft switch directly, the NGN terminal only needs to be configured with the IP address of the soft switch, without any knowledge of the IP address of the NGN SMC. The access code of the NGN SMC is carried in the Uniform Resource Address request (Request URI) field of the SIP message. Upon receipt of the short message request, the soft switch forwards short message request to the NGN SMC according to the access code of the NGN SMC carried in the Request URI.

At step 301, the NGN SMC transmits a short message according to the received short message transmission request.

At this step, a protocol converting module is provided in the NGN SMC, for converting an SIP-based message from the NGN terminal to a message supported by its own protocol, and transmitting the short message according to the received short message transmission request.

When the NGN SMC transmits a short message to the NGN terminal, the short message may be carried in an SIP message, such as an SIP INFO message or SIP MESSAGE message. The NGN SMC transmits a short message to the soft switch. Based on the number in the Request URI of the SIP message (that is, the called number), the soft switch transmits the received SIP message transparently to the NGN terminal corresponding to the IP address registered with the called number. Thus, it can be seen that there is no need for the NGN SMC to know the registered address of the NGN terminal.

Further, if the NGN terminal is not registered, the soft switch may return an error code like 404 to the NGN SMC.

Note that transparent transmission of the soft switch means that the soft switch forwards the common SIP element in the received SIP message without any change. The common SIP element may include a From header field carrying transmitter information, a To header field carrying recipient information, a Content Type field identifying the context type, a Content Length field, a Status Code, a Body field carrying the short message, and etc.

If no Body field is carried in the received SIP message, the soft switch may simply discard the SIP message.

Alternatively, the NGN SMC may use the standardized short message protocol for transmission to common terminals.

Detailed descriptions are given below with reference to illustrative embodiments to methods for the NGN terminal to transmit a short message, to receive a short message, and to acquire an off-line short message according to embodiments of the present invention.

FIG.4 illustrates an embodiment for an NGN terminal to transmit a short message according to the present invention. Consider that the NGN terminal has been registered in the soft switch. As shown in FIG.4, transmission of the short message may include the following steps.

At step 400, the NGN terminal initiates a short message transmission request to the NGN SMC via the soft switch.

After the NGN terminal logs in, the NGN terminal may choose a destination number for transmission of the short message through commonly used tools such as a friend list or a contact list, or choose to transmit a short message via a menu or a task bar. Here, as to how the user transmits a short message via an interface provided at the NGN terminal, it is not within the scope of the present invention.

The short message transmission request, such as the common SIP element carried in the SIP INFO message, is well known to those skilled in the art, and detailed description is omitted here. Note that the access code of the NGN SMC is carried in the To header field. Furthermore, the short message transmission request must also carry short message transmission event parameters, as shown in Table 2.

**Table 2**

| Parameter | Type | Mandatory/Optional | Description |
|---|---|---|---|
| cmd | Integer | Mandatory | Command code corresponding to short message transmission request |
| msgid | String | Mandatory | Identification of a short message transmitted from the terminal (its uniqueness is secured by the terminal) |
| recv | String | Mandatory | Number for short message reception |
| isreturn | Integer | Mandatory | The transmitting terminal needs to receive a return notification for short message, for example, 0 indicates no need, 1 indicates a need |
| cont | String | Mandatory | Content of the short message |

At this step, the command code corresponding to the short message transmission request event is 3001 in Table 1.

Consider that the NGN terminal transmitting a short message chooses to receive a return notification for the short message in this embodiment.

At step 401, the NGN SMC returns a short message transmission response such as SIP 200OK to the NGN terminal via the soft switch, and returns the processing result to the NGN terminal.

In addition to the common SIP element, the SIP 200OK message shall carry short message transmission response event parameters, as shown in Table 3.

**Table 3**

| Parameter | Type | Mandatory/Optional | Description |
|---|---|---|---|
| cmd | Integer | Mandatory | Command code corresponding to short message transmission response |
| res | Integer | Mandatory | The processing result returned for short message transmission, for example, 1 indicates short message transmission ready, -1 indicates system abnormity, -78 indicates short message transmission failure, -79 indicates short message forwarding forbidden, and so on. |

At this step, the command code corresponding to the short message transmission request event is 3002 in Table 1

At step 402, the NGN SMC returns a short message forwarding response to the NGN terminal via the soft switch, such as the SIP INFO message, and returns the short message forwarding result to the NGN terminal.

In addition to the common SIP element, the SIP INFO message shall carry short message forwarding response event parameters, that is, a short message transmission forwarding result event parameter is returned to the terminal, as shown in Table 4.

**Table 4**

| Parameter | Type | Mandatory/Optional | Description |
|---|---|---|---|
| cmd | Integer | Mandatory | Command code for short message forwarding response |
| msgid | String | Mandatory | Identification of a short message transmitted from a terminal |
| res | Integer | Mandatory | The returned short message forwarding result, for example, 1 indicates short message forwarding success, -1 indicates system abnormity, -78 indicates short message forwarding failure, -79 indicates short message being obsolete, and so on |

At this step, the command code corresponding to the short message forward response event is 3003 in Table 1.

At step 403, after receiving the short message forwarding response, the NGN terminal will typically return a response to the NGN SMC via the soft switch, indicating that it has obtained information whether the short message is transmitted successfully.

At step 404, after the NGN SMC processes the short message transmission request and receives the return notification returned from the short message recipient (the destination number), the NGN SMC returns a reception response in the SIP INFO message to the NGN terminal via the soft switch.

In addition to the common SIP element, the reception response shall carry reception response event parameters, that is, a return notification event parameter is returned for indicating that the short message is received at the terminal, as shown in Table 5.

**Table 5**

| Parameter | Type | Mandatory/Optional | Description |
|---|---|---|---|
| cmd | Integer | Mandatory | Command code for short message transmission and return notification |
| msgid | String | Mandatory | Identification of a short message transmitted from a terminal |
| secvt | String | Mandatory | Short message delivery time in format of yyyymmddhhmmss |
| res | Integer | Mandatory | The processing result returned for the short message transmission result, for example, 1 indicates that the terminal receives the short message successfully, -1 indicates system abnormity, -78 indicates short message transmission failure, -79 indicates short message being obsolete, and so on |

At this step, the command code corresponding to the reception response event is 3004 in Table 1.

At step 405, after receiving the reception response, the NGN terminal generally will return a confirmation response to the NGN SMC via the soft switch, indicating its knowledge regarding whether the recipient has received the short message successfully.

Note that when the NGN terminal multicasts a short message, a single short message may be transmitted several times with the method shown in FIG.4.

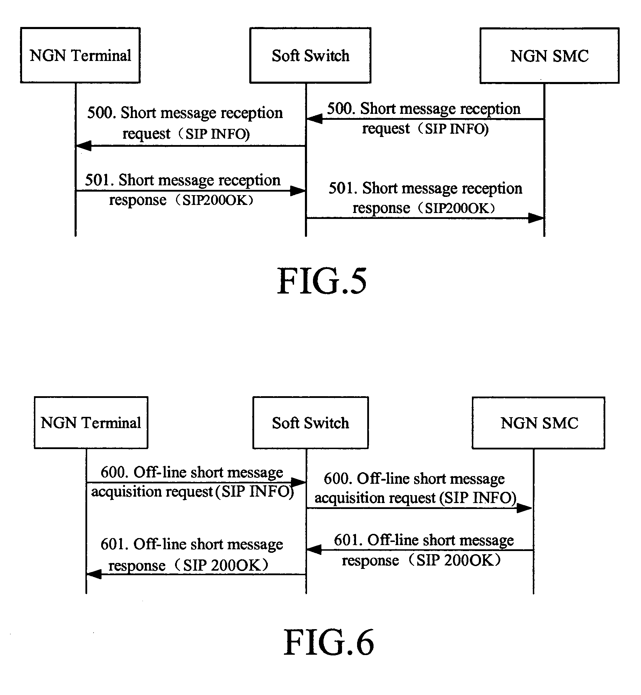

FIG.5 illustrates an embodiment for an NGN terminal to receive a short message according to the present invention. Consider that the NGN terminal has been registered in the soft switch. As shown in FIG.5, reception of the short message may include the following steps.

At step 500, the NGN SMC transmits a short message reception request such as an SIP INFO message, to the NGN terminal via the soft switch.

In addition to the common SIP element, the short message reception request shall carry a short message reception event parameter, as shown in Table 6.

**Table 6**

| Parameter | Type | Mandatory/Optional | Description |
|---|---|---|---|
| cmd | Integer | Mandatory | Command code corresponding to short message reception request |
| send | String | Mandatory | The number of a short message transmitter |
| time | String | Mandatory | Delivery time by NGN SMC to the receiving terminal in format of yyyymmddhhmmss |
| cont | String | Mandatory | Content of the short message |

At this step, the command code corresponding to the short message reception event is 3005 in Table 1.

At step 501, after receiving the short message, the NGN terminal generally returns a confirmation message such as an SIP 200OK message via the soft switch to the NGN SMC, indicating that the short message is received.

FIG.6 illustrates an embodiment for an NGN terminal to acquire an off-line short message according to the present invention. When the NGN terminal is off-line, if a short message is transmitted to the NGN terminal, the NGN SMC may carry the short message in an SIP INFO message and send it to the soft switch, as shown in FIG.5. If the soft switch finds that the terminal is not on-line, it returns a 404 error code to the NGN SMC. At this point, the NGN SMC stores the short message which is not yet transmitted successfully to the NGN terminal. When the NGN terminal goes on-line and is registered with the soft switch, the method for the NGN terminal to acquire the off-line short message according to the present invention may include the following steps.

At step 600, the NGN terminal transmits an off-line short message acquisition request such as an SIP INFO message to the NGN SMC via the soft switch.

In addition to the common SIP element, the off-line short message acquisition request shall carry a terminal off-line short message acquisition request event parameter, as shown in Table 7.

**Table 7**

| Parameter | Type | Mandatory/Optional | Description |
|---|---|---|---|
| cmd | Integer | Mandatory | Command code for the terminal to acquire an off-line short message |

At this step, the command code corresponding to the terminal off-line short message acquisition request event is 3006 in Table 1.

At step 601, the NGN SMC processes the received off-line short message request. If any short message not transmitted for the NGN terminal is stored, an SIP 200OK message is returned to the NGN terminal, and the off-line short message is transmitted to the NGN terminal.

At this step, the method for transmitting the off-line short message to the NGN terminal is shown in FIG.5, and detailed description is omitted here.

In the method and system of implementing SMS for an NGN terminal according to the present invention, SMS may be implemented for various NGN terminals by setting an NGN SMC and extending the SIP message. In the present invention, the NGN SMC is transparent to the NGN terminal. The NGN terminal may utilize an existing SIP communication link with the soft switch, and the soft switch may transparently transmit SIP messages between the NGN terminal and the NGN SMC. The overall system performance may be improved, and a high system extensibility and security may be obtained. Also, the system's subsequent extensibility to other communication capability may be supported so that an NGN terminal may have functions such as instant messaging, multimedia messaging and the like.

The invention has been described above with reference to preferred embodiments, which are not used to limit the scope of the invention. Within the scope of the invention, those skilled in the art may make various changes, equivalent substitutions and improvements without departing from the scope of the attached claims.

## Claims

1. A method of implementing Short Message Service, SMS, for a Next Generation Network, NGN, terminal, **characterized in that**, the method comprises:
receiving, by an NGN Short Message Center, SMC, a short message transmission request forwarded by a soft switch, wherein the short message transmission request is from an NGN terminal;
converting, by the NGN SMC, the received short message transmission request into a message format compliant with its own protocol; and
transmitting, by the NGN SMC, a short message according to the received short message transmission request.

2. The method according to claim 1, wherein the short message transmission request is a Session Initiation Protocol, SIP, INFO message carrying information of a Body field or an SIP MESSAGE message carrying information of a Body field.

3. The method according to claim 2, wherein the short message transmission request carries an access code of the SMC, a common SIP element and a short message transmission event parameter,
and wherein the short message transmission event parameter comprises a command code indicating the short message transmission request, a short message identification uniquely identifying a short message to be transmitted, a recipient parameter indicating the number for receiving the short message, a return notification option indicating whether the NGN terminal transmitting the short message needs to receive a return notification for the short message, and a content parameter carrying the content of the short message.

4. The method according to claim 1, further comprising:
returning, by the NGN SMC via the soft switch, a short message transmission response carrying a processing result to the NGN terminal, wherein the short message transmission response carries a common SIP element and a short message transmission response event parameter, wherein the short message transmission response event parameter comprises a command code indicating the short message transmission response and a processing result returned for short message transmission, and the processing result comprises: short message ready for transmission, system abnormity, short message transmission failure, or short message forwarding forbidden;
returning, by the NGN SMC via the soft switch, a short message forwarding response carrying a short message forwarding result to the NGN terminal, wherein the short message forwarding response carries a common SIP element and a short message forwarding response event parameter, wherein the short message forwarding response event parameter comprises a command code indicating the short message forwarding response, a short message identification uniquely identifying a short message to be transmitted, and the short message forwarding result , and the short message forwarding result comprises short message forwarding success, system abnormity, short message forwarding failure, or short message being obsolete.

5. The method according to claim 3, wherein if the return notification option indicates the need for reception of a return notification for the short message, the method further comprises:
returning, by the NGN SMC via the soft switch, a reception response to the NGN terminal transmitting the short message after receiving a return notification from the recipient of the short message; and
receiving, by the NGN SMC via the soft switch, a confirmation response returned by the NGN terminal receiving the reception response; wherein the reception response carries a common SIP element and a reception response event parameter, wherein
the reception response event parameter comprises a command code indicating the reception response, a short message identification uniquely identifying a short message to be transmitted, a short message delivery time, and a short message transmission result; and the short message transmission result comprises:
the recipient receiving the short message successfully, system abnormity, short message transmission failure, or short message being obsolete.

6. The method according to claim 1, wherein transmitting, by the NGN SMC, a short message according to the received short message transmission request comprises:
transmitting, by the NGN SMC, a short message reception request to the receiving NGN terminal via a soft switch of the recipient of the short message;
receiving, by the NGN SMSC via the soft switch of the recipient of the short message, a confirmation message returned by the receiving NGN terminal after the receiving NGN terminal receives the short message;
or,
transmitting, by the NGN SMC the short message to a common terminal with a standardized short message protocol.

7. The method according to claim 6, wherein the short message reception request carries a common SIP element and a short message reception event parameter; and wherein
the short message reception event parameter comprises: a command code indicating the short message reception request, a transmitter parameter indicating the number for transmitting the short message, the time at which the short message is forwarded by the NGN SMC, and the content of the forwarded short message.

8. The method according to claim 6, wherein if the receiving NGN terminal is off-line, the method further comprises:
receiving, by the NGN SMC, an error code returned from the soft switch of the recipient of the short message, and
storing, by the NGN SMC, a short message unsuccessfully sent.

9. The method according to claim 8, wherein if the receiving NGN terminal is on-line and is registered, the method further comprises:
receiving, by the NGN SMC, via the soft switch of the recipient of the short message an off-line short message acquisition request transmitted by the receiving NGN terminal; and
transmitting, by the NGN SMC, the short message stored in the NGN SMC as an off-line short message to the NGN terminal.

10. The method according to claim 9, wherein the off-line short message acquisition request carries a common SIP element and an off-line short message acquisition request event parameter containing a command code for indicating off-line short message acquisition.

11. The method according to claim 3, 4, 5, 7 or 10, wherein the common SIP element at least comprises: a From header field carrying transmitter information, a To header field carrying recipient information, a Content Type field identifying a context type, a Content Length field indicating a context length, a Status Code, and a Body field carrying the short message.

12. A Next Generation Network, NGN, Short Message Center, SMC, **characterized in that**, the NGN SMC comprises a short message transmitting unit and/or a short message receiving unit and/or a protocol converting module and/or an off-line short message acquiring unit , wherein:
the short message transmitting unit is configured to receive a short message transmission request from an NGN terminal forwarded via a soft switch, and to transmit a short message to the NGN terminal;
the short message receiving unit is configured to forward a short message reception request to the NGN terminal via the soft switch so that the NGN terminal receives a short message;
the protocol converting module, configured to convert the received short message transmission request based on SIP from the soft switch, into a message identifiable by itself, and transmit the message to the short message transmitting unit; or transmit the short message reception request to the short message receiving unit after converting the short message reception request into an SIP-based message; and
the off-line short message acquiring unit is configured to receive an off-line short message acquisition request from the NGN terminal and forwarded via the soft switch, to carry a stored short message for the NGN terminal in a Session Initiation Protocol, SIP, based message, and to forward the SIP-based message to the NGN terminal via the soft switch.

13. A system of implementing Short Message Service, SMS, for a Next Generation Network, NGN, terminal, **characterized in that**, the system comprises an NGN Short Message Center, SMC, according to claim 12, wherein the system further comprises an soft switch,
the soft switch is configured to transparently transmit information exchanged between the NGN terminal and the NGN SMC.

## Patentansprüche

1. Verfahren zum Implementieren von SMS (Short Message Service) für ein NGN-Endgerät (Next Generation Network), **dadurch gekennzeichnet, dass** das Verfahren Folgendes umfasst:
Empfangen einer von einem Softswitch weitergeleiteten Kurznachrichtübertragungsanforderung durch ein NGN-SMC (Short Message Center), wobei die Kurznachrichtübertragungsanforderung von einem NGN-Endgerät kommt;
Umwandeln der empfangenen Kurznachrichtübertragungsanforderung durch das NGN-SMC in ein mit seinem eigenen Protokoll konformen Nachrichtenformat und Übertragen einer Kurznachricht durch das NGN-SMC gemäß der empfangenen Kurznachrichtübertragungsanforderung.

2. Verfahren nach Anspruch 1, wobei die Kurznachrichtübertragungsanforderung eine SIP-INFO-Nachricht (Session Initiation Protocol) ist, die Informationen eines Body-Felds führt, oder eine SIP-MESSAGE-Nachricht, die Informationen eines Body-Felds führt.

3. Verfahren nach Anspruch 2, wobei die Kurznachrichtübertragungsanforderung einen Zugangscode des SMC, ein gemeinsames SIP-Element und einen Kurznachrichtübertragungsereignisparameter führt,
und wobei der Kurznachrichtübertragungsereignisparameter einen Befehlscode umfasst, der die Kurznachrichtübertragungsanforderung anzeigt, wobei eine Kurznachrichtidentifikation eine zu übertragende Kurznachricht eindeutig identifiziert, wobei ein Empfängerparameter die Nummer zum Empfangen der Kurznachricht anzeigt, wobei eine Rückkehr-Benachrichtigungsoption anzeigt, ob das die Kurznachricht übertragende NGN-Endgerät eine Antwortbestätigung für die Kurznachricht empfangen muss, und wobei ein Inhaltsparameter den Inhalt der Kurznachricht führt.

4. Verfahren nach Anspruch 1, weiterhin umfassend:
Zurückschicken einer ein Verarbeitungsergebnis führenden Kurznachrichtübertragungsantwort durch das NGN-SMC über den Softswitch an das NGN-Endgerät, wobei die Kurznachrichtübertragungsantwort ein gemeinsames SIP-Element und einen Kurznachrichtübertragungsantwortereignisparameter trägt, wobei der Kurznachrichtübertragungsantwortereignisparameter einen Befehlscode umfasst, der die Kurznachrichtübertragungsantwort und ein für die Kurznachrichtübertragung zurückgeschicktes Verarbeitungsergebnis anzeigt, und das Verarbeitungsergebnis Folgendes umfasst: eine zur Übertragung bereite Kurznachricht, Systemabnormität, Kurznachrichtübertragungsfehler oder Kurznachrichtweiterleitung verboten;
Zurückschicken einer ein Kurznachrichtweiterleitungsergebnis führenden Kurznachrichtweiterleitungsantwort durch das NGN-SMC über den Softswitch an das NGN-Endgerät, wobei die Kurznachrichtweiterleitungsantwort ein gemeinsames SIP-Element und einen Kurznachrichtweiterleitungsantwortereignisparameter führt, wobei der Kurznachrichtweiterleitungsantwortereignisparameter einen Befehlscode umfasst, der die Kurznachrichtweiterleitungsantwort anzeigt, eine Kurznachrichtidentifikation, die eine zu übertragende Kurznachricht eindeutig identifiziert, und das Kurznachrichtweiterleitungsergebnis und wobei das Kurznachrichtweiterleitungsergebnis einen Kurznachrichtweiterleitungserfolg, Systemabnormität, Kurznachrichtweiterleitungsfehler oder, dass die Kurznachricht obsolet ist, umfasst.

5. Verfahren nach Anspruch 3, wobei, falls die Rückkehr-Benachrichtigungsoption die Notwendigkeit für den Empfang einer Rückkehr-Benachrichtigung für die Kurznachricht anzeigt, das Verfahren weiterhin Folgendes umfasst:
Zurückschicken einer Empfangsantwort durch das NGN-SMC über den Softswitch an das die Kurznachricht übertragende NGN-Endgerät nach dem Empfangen einer Rückkehr-Benachrichtigung von dem Empfänger der Kurznachricht und Empfangen einer durch das die Empfangsantwort empfangende NGN-Endgerät zurückgeschickten Bestätigungsantwort durch das NGN-SMC über den Softswitch;
wobei die Empfangsantwort ein gemeinsames SIP-Element und einen Empfangsantwortereignisparameter führt, wobei
der Empfangsantwortereignisparameter einen Befehlscode umfasst, der die Empfangsantwort, eine eine zu übertragende Kurznachricht eindeutig identifizierende Kurznachrichtidentifikation, eine Kurznachrichtzustellzeit und ein Kurznachrichtübertragungsergebnis anzeigt; und das Kurznachrichtübertragungsergebnis Folgendes umfasst:
den die Kurznachricht erflogreich empfangenden Empfänger, Systemabnormität, Kurznachrichtübertragungsfehler oder, dass die Kurznachricht obsolet ist.

6. Verfahren nach Anspruch 1, wobei das Übertragen einer Kurznachricht gemäß der empfangenen Kurznachrichtübertragungsanforderung durch das NGN-SMC Folgendes umfasst:
Übertragen einer Kurznachrichtempfangsanforderung durch das NGN-SMC an das empfangende NGN-Endgerät über einen Softswitch des Empfängers der Kurznachricht;
Empfangen einer von dem empfangenden NGN-Endgerät, nachdem das empfangende NGN-Endgerät die Kurznachricht empfängt, zurückgeschickten Bestätigungsnachricht durch das NGN-SMC über den Softswitch des Empfängers der Kurznachricht;
oder
Übertragen der Kurznachricht durch das NGN-SMC an ein gemeinsames Endgerät mit einem standardisierten Kurznachrichtprotokoll.

7. Verfahren nach Anspruch 6, wobei die Kurznachrichtempfangsanforderung ein gemeinsames SIP-Element und einen Kurznachrichtempfangsereignisparameter führt und wobei
der Kurznachrichtempfangsereignisparameter Folgendes umfasst: einen Befehlscode, der die Kurznachrichtempfangsanforderung anzeigt, einen Senderparameter, der die Nummer für das Übertragen der Kurznachricht anzeigt, die Zeit, zu der die Kurznachricht von dem NGN-SMC weitergeleitet wird, und den Inhalt der weitergeleiteten Kurznachricht.

8. Verfahren nach Anspruch 6, wobei, falls das empfangende NGN-Endgerät offline ist, das Verfahren weiterhin Folgendes umfasst:
Empfangen eines von dem Softswitch des Empfängers der Kurznachricht zurückgeschickten Fehlercodes durch das NGN-SMC und
Speichern einer nicht erfolgreich gesendeten Kurznachricht durch das NGN-SMC.

9. Verfahren nach Anspruch 8, wobei, falls das empfangende NGN-Endgerät online ist und registriert ist, das Verfahren weiterhin Folgendes umfasst:
Empfangen einer von dem empfangenden NGN-Endgerät übertragenen Offline-Kurznachrichterfassungsanforderung durch das NGN-SMC über den Softswitch des Empfängers der Kurznachricht und
Übertragen der in dem NGN-SMC gespeicherten Kurznachricht durch das NGN-SMC als eine Offline- Kurznachricht an das NGN-Endgerät.

10. Verfahren nach Anspruch 9, wobei die Offline- Kurznachrichterfassungsanforderung ein gemeinsames SIP-Element und einen Offline-Kurznachrichterfassungsanforderungsereignisparameter, der einen Befehlscode zum Anzeigen einer Offline-Kurznachrichterfassung enthält, führt.

11. Verfahren nach Anspruch 3, 4, 5, 7 oder 10, wobei das gemeinsame SIP-Element mindestens Folgendes umfasst: ein Senderinformationen führendes From-Kopfteilfeld, ein Empfängerinformationen führendes To-Kopfteilfeld, ein einen Kontexttyp identifizierendes Content-Type-Feld, ein eine Kontextlänge anzeigendes Content-Length-Feld, einen Status-Code und ein die Kurznachricht führendes Body-Feld.

12. NGN-SMC (Next Generation Network Short Message Center), **dadurch gekennzeichnet, dass** das NGN-SMC eine Kurznachrichtübertragungseinheit und/oder eine Kurznachrichtempfangseinheit und/oder ein Protokollumwandlungsmodul und/oder eine Offline-Kurznachrichterfassungseinheit umfasst, wobei:
die Kurznachrichtübertragungseinheit konfiguriert ist zum Empfangen einer über einen Softswitch weitergeleiteten Kurznachrichtübertragungsanforderung von einem NGN-Endgerät und zum Übertragen einer Kurznachricht an das NGN-Endgerät;
die Kurznachrichtempfangseinheit konfiguriert ist zum Weiterleiten einer Kurznachrichtempfangsanforderung an das NGN-Endgerät über den Softswitch, so dass das NGN-Endgerät eine Kurznachricht empfängt;
das Protokollumwandlungsmodul konfiguriert ist zum Umwandeln der empfangenen Kurznachrichtübertragungsanforderung auf der Basis von SIP von dem Softswitch in eine durch sich selbst identifizierbare Nachricht und Übertragen der Nachricht an die Kurznachrichtübertragungseinheit; oder Übertragen der Kurznachrichtempfangsanforderung an die Kurznachrichtempfangseinheit nach dem Umwandeln der Kurznachrichtempfangsanforderung in eine SIP-basierte Nachricht und
die Offline-Kurznachrichterfassungseinheit konfiguriert ist zum Empfangen einer Offline-Kurznachrichterfassungsanforderung von dem NGN-Endgerät und zum Weiterleiten über den Softswitch, um eine gespeicherte Kurznachricht für das NGN-Endgerät in einer SIP-basierten (Session Initiation Protocol) Nachricht zu führen und die SIP-basierte Nachricht über den Softswitch an das NGN-Endgerät weiterzuleiten.

13. System zum Implementieren von SMS (Short Message Service) für ein NGN-Endgerät (Next Generation Network), **dadurch gekennzeichnet, dass** das System ein NGN-SMC (Short Message Center) umfasst, nach Anspruch 12, wobei das System weiterhin einen Softswitch umfasst,
wobei der Softswitch konfiguriert ist zum transparenten Übertragen von zwischen dem NGN-Endgerät und dem NGN-SMC ausgetauschten Informationen.

## Revendications

1. Procédé de mise en oeuvre d'un Service de Messages Courts, SMS, pour un terminal de Réseau de Prochaine Génération, NGN, **caractérisé en ce que** le procédé comprend :
la réception, par un Centre de Messages Courts, SMC, de NGN, d'une demande de transmission de message court acheminée par un commutateur logique, la demande de transmission de message court provenant d'un terminal NGN ;
la conversion, par le SMC NGN, de la demande de transmission de message court reçue en un format de message compatible avec son propre protocole ; et la transmission, par le SMC NGN, d'un message court conformément à la demande de transmission de message court reçue.

2. Procédé selon la revendication 1, dans lequel la demande de transmission de message court est un message INFO à Protocole de Lancement de Session, SIP, portant des informations d'un champ de Corps ou un message MESSAGE SIP portant des informations d'un champ de Corps.

3. Procédé selon la revendication 2, dans lequel la demande de transmission de message court porte un code d'accès du SMC, un élément SIP commun et un paramètre d'événement de transmission de message court,
et dans lequel le paramètre d'événement de transmission de message court comprend un code de commande indiquant la demande de transmission de message court, une de manière unique identification de message court identifiant un message court à transmettre, un paramètre de destinataire indiquant le numéro destiné à recevoir le message court, une option de notification de renvoi indiquant si le terminal NGN qui transmet le message court doit recevoir une notification de renvoi pour le message court, et un paramètre de contenu portant le contenu du message court.

4. Procédé selon la revendication 1, comprenant en outre :
le renvoi au terminal NGN, par le SMC NGN par l'intermédiaire du commutateur logique, d'une réponse de transmission de message court portant un résultat de traitement, la réponse de transmission de message court portant un élément SIP commun et un paramètre d'événement de réponse de transmission de message court, le paramètre d'événement de réponse de transmission de message court comprenant un code de commande indiquant la réponse de transmission de message court et un résultat de traitement renvoyé pour la transmission de message court, et le résultat de traitement comprenant : un message court prêt à être transmis, une anomalie système, un échec de transmission de message court, ou un acheminement de message court interdit ;
le renvoi au terminal NGN, par le SMC NGN par l'intermédiaire du commutateur logique, d'une réponse d'acheminement de message court portant un résultat d'acheminement de message court, la réponse d'acheminement de message court portant un élément SIP commun et un paramètre d'événement de réponse d'acheminement de message court, le paramètre d'événement de réponse d'acheminement de message court comprenant un code de commande indiquant la réponse d'acheminement de message court, une identification de message court identifiant de manière unique un message court à transmettre, et le résultat d'acheminement de message court, et le résultat d'acheminement de message court comprenant : un acheminement de message court réussi, une anomalie système, un échec d'acheminement de message court, ou un message court obsolète.

5. Procédé selon la revendication 3, dans lequel si l'option de notification de renvoi indique la nécessité de recevoir une notification de renvoi du message court, le procédé comprend en outre :
le renvoi, par le SMC NGN par l'intermédiaire du commutateur logique, d'une réponse de réception au terminal NGN transmettant le message court après avoir reçu une notification de renvoi du destinataire du message court ; et la réception, par le SMC NGN par l'intermédiaire du commutateur logique, d'une réponse de confirmation renvoyée par le terminal NGN recevant la réponse de réception ; la réponse de réception portant un élément SIP commun et un paramètre d'événement de réponse de réception, dans lequel
le paramètre d'événement de réponse de réception comprend un code de commande indiquant la réponse de réception, une identification de message court identifiant de manière unique un message court à transmettre, une heure de livraison de message court, et un résultat de transmission de message court ; et le résultat de transmission de message court comprend :
la réception réussie du message court par le destinataire, une anomalie système, un échec de transmission de message court, ou un message court obsolète.

6. Procédé selon la revendication 1, dans lequel la transmission, par le SMC NGN, d'un message court conformément à la demande de transmission de message court reçue comprend :
la transmission, par le SMC NGN, d'une demande de réception de message court au terminal NGN destinataire par l'intermédiaire d'un commutateur logique du destinataire du message court ;
la réception, par le SMSC NGN par l'intermédiaire du commutateur logique du destinataire du message court, d'un message de confirmation renvoyé par le terminal NGN destinataire après que le terminal NGN destinataire reçoit le message court ;
ou,
la transmission, par le SMC NGN, du message court à un terminal commun avec un protocole de message court normalisé.

7. Procédé selon la revendication 6, dans lequel la demande de réception de message court porte un élément SIP commun et un paramètre d'événement de réception de message court ; et dans lequel
le paramètre d'événement de réception de message court comprend : un code de commande indiquant la demande de réception de message court, un paramètre d'expéditeur indiquant le numéro transmettant le message court, l'heure à laquelle le message court est acheminé par le SMC NGN, et le contenu du message court acheminé.

8. Procédé selon la revendication 6, dans lequel si le terminal NGN destinataire est hors ligne, le procédé comprend en outre :
la réception, par le SMC NGN, d'un code d'erreur renvoyé par le commutateur logique du destinataire du message court, et
la mémorisation, par le SMC NGN, d'un message court en échec d'envoi.

9. Procédé selon la revendication 8, dans lequel si le terminal NGN destinataire est en ligne et enregistré, le procédé comprend en outre :
la réception, par le SMC NGN, par l'intermédiaire du commutateur logique du destinataire du message court d'une demande d'acquisition de message court hors ligne transmise par le terminal NGN destinataire ; et
la transmission au terminal NGN, par le SMC NGN, du message court mémorisé dans le SMC NGN comme message court hors ligne.

10. Procédé selon la revendication 9, dans lequel la demande d'acquisition de message court hors ligne porte un élément SIP commun et un paramètre d'événement de demande d'acquisition de message court hors ligne contenant un code de commande pour indiquer une acquisition de message court hors ligne.

11. Procédé selon la revendication 3, 4, 5, 7 ou 10, dans lequel l'élément SIP commun comprend au moins : un champ d'en-tête De portant des informations d'expéditeur ; un champ d'en-tête A portant des informations de destinataire, un champ Type Contenu identifiant un type de contexte, un champ Longueur Contenu indiquant une longueur de contexte, un Code d'Etat, et un champ Corps portant le message court.

12. Centre de Messages Courts, SMC, de Réseau de Prochaine Génération, NGN, **caractérisé en ce que** le SMC NGN comprend une unité de transmission de messages courts et /ou une unité de réception de messages courts et/ou un module de conversion de protocole et/ou une unité d'acquisition de messages courts hors ligne, dans lequel :
l'unité de transmission de messages courts est configurée pour recevoir une demande de transmission de message court depuis un terminal NGN acheminée par l'intermédiaire d'un commutateur logique, et transmettre un message court au terminal NGN ;
l'unité de réception de messages courts est configurée pour acheminer une demande de réception de message court au terminal NGN par l'intermédiaire du commutateur logique de telle sorte que le terminal NGN reçoive un message court ;
le module de conversion de protocole, configuré pour convertir la demande de transmission de message court basé sur SIP provenant du commutateur logique en un message identifiable en soi, et transmettre le message à l'unité de transmission de message court ; ou transmettre la demande de réception de message court à l'unité de réception de message court après avoir converti la demande de réception de message court en un message basé sur SIP ; et
l'unité d'acquisition de message court hors ligne est configurée pour recevoir une demande d'acquisition de message court hors ligne depuis le terminal NGN et acheminée par l'intermédiaire du commutateur logique, pour porter un message court mémorisé destiné au terminal NGN dans un message basé sur un Protocole de Lancement de Session, SIP, et transmettre le message basé sur SIP au terminal NGN par l'intermédiaire du commutateur logique.

13. Système d'implémentation d'un Service de Messages Courts, SMS, pour un terminal de Réseau de Prochaine Génération, NGN, **caractérisé en ce que** le système comprend un Centre de Messages Courts, SMC, de NGN, selon la revendication 12, le système comprenant en outre un commutateur logique,
le commutateur logique étant configuré pour transmettre de façon transparente les informations échangées entre le terminal NGN et le SMC NGN.
